# EUROPEAN PATENT APPLICATION

(11) **EP 4 213 232 A1**
(43) Date of publication of application: **19.07.2023**
(21) Application number: 21866431.6
(22) Date of filing: 04.08.2021
(51) Int. Cl.: H01M 4/13, H01M 4/505, H01M 4/525, H01M 10/052, H01M 10/0567, H01M 10/0568, H01M 10/0569

(54) **NON-AQUEOUS LIQUID ELECTROLYTE, AND NON-AQUEOUS LIQUID-ELECTROLYTE SECONDARY CELL IN WHICH SAID NON-AQUEOUS LIQUID ELECTROLYTE IS USED**

(30) Priority: 10.09.2020 JP 2020152382
(71) Applicant: Mitsubishi Chemical Corporation, Chiyoda-ku Tokyo 100-8251 (JP); MU Ionic Solutions Corporation, Tokyo 100-8251 (JP)
(72) Inventor: NISHIO, Koichi, Tokyo 100-8251 (JP); KAWAKAMI, Daisuke, Tokyo 100-8251 (JP)
(74) Representative: Hoffmann Eitle
(86) International application number: PCT/JP2021/029028
(87) International publication number: WO 2022/054471

(57) **Abstract**

The present invention provides a non-aqueous liquid electrolyte that can undergo capacity loss during continuous charging of a cell. A non-aqueous liquid electrolyte containing oxalato-complex anions (A), LiPF₆, a symmetrical chain-form carbonate, and a chain-form carboxylic acid ester (C) in which the viscosity at 25°C is 0.01-0.47 cP, wherein the non-aqueous liquid electrolyte is characterized in that: the ratio (A/B) of the amount (mass) of oxalato-complex anions (A) to the amount (mass) of PF₆⁻ anions (B) is 0.0001-0.30; and the total amount of the symmetrical chain-form carbonate and the chain-form carboxylic acid ester (C) in which the viscosity at 25°C is 0.01-0.47 cP, relative to the total amount of the non-aqueous liquid electrolyte, is 1-45 mass%.

## Description

### TECHNICAL FIELD

The present invention relates to: a non-aqueous liquid electrolyte; and a non-aqueous liquid electrolyte secondary battery including the non-aqueous liquid electrolyte.

### BACKGROUND ART

Lithium non-aqueous liquid electrolyte secondary batteries in which a lithium-containing transition metal oxide and a non-aqueous solvent are used as a positive electrode and a liquid electrolyte, respectively, can realize a high energy density and, therefore, have been used in a wide range of applications ranging from small-sized power sources for mobile phones, laptop computers and the like to large-sized power sources for automobiles, trains, and load leveling. However, in recent years, there is an increasing demand for improvement in the performance of non-aqueous liquid electrolyte secondary batteries, and it is strongly demanded to improve various properties.

For example, Patent Document 1 discloses a non-aqueous liquid electrolyte that contains a fluoroethylene carbonate, a chain carbonate, and a chain carboxylic acid ester, and it is disclosed that, in a non-aqueous liquid electrolyte secondary battery containing this liquid electrolyte, deterioration caused by charge-discharge cycles at high temperature can be inhibited and the low-temperature discharge capacity can be improved.

Patent Document 2 discloses a non-aqueous liquid electrolyte that contains a mixture having specific concentrations of ethylene carbonate, methyl acetate and/or ethyl acetate, and ethyl methyl carbonate, along with lithium bis(oxalato)borate as a main electrolyte, and it is disclosed that the low-temperature discharge capacity can be improved in a non-aqueous liquid electrolyte secondary battery containing this liquid electrolyte.

Patent Document 3 discloses a non-aqueous liquid electrolyte that contains ethylene carbonate, dimethyl carbonate, and ethyl methyl carbonate as solvents, along with a chain carboxylic acid ester such as ethyl propionate, and further contains a specific oxalato lithium salt and lithium fluorophosphate as well as vinylene carbonate and/or fluoroethylene carbonate as additives. It is disclosed that, in a non-aqueous liquid electrolyte secondary battery containing this liquid electrolyte, the internal resistance (direct-current resistance) is reduced, and deterioration caused by rapid charge-discharge cycles at room temperature and high temperature can be inhibited.

Patent Document 4 discloses a non-aqueous liquid electrolyte that contains specific lithium salt electrolytes and several kinds of lithium salt additives. It is disclosed that a non-aqueous liquid electrolyte secondary battery containing this liquid electrolyte exhibits good low-temperature input-output characteristics after high-temperature storage, and that deterioration of the battery caused by high-temperature storage can be inhibited.

### PRIOR ART DOCUMENTS

### PATENT DOCUMENTS

[Patent Document 1] U.S. Patent Application Publication No. 2012/0007560
[Patent Document 2] U.S. Patent Application Publication No. 2006/0172202
[Patent Document 3] European Patent Application Publication No. 3422458
[Patent Document 4] WO 2016/009994

### SUMMARY OF THE INVENTION

### PROBLEMS TO BE SOLVED BY THE INVENTION

In the non-aqueous liquid electrolyte secondary batteries of recent years, the properties required for battery-powered automobiles in particular are increasingly demanding, and there is a need for improvement in the battery durability at a high level. However, the non-aqueous liquid electrolyte secondary batteries disclosed in Patent Documents 1 to 4 have a problem in that the capacity loss during continuous charging is large.

An object of the present invention is to provide a non-aqueous liquid electrolyte which can solve the above-described problems in non-aqueous liquid electrolyte secondary batteries and inhibit a capacity loss during continuous charging.

### MEANS FOR SOLVING THE PROBLEMS

The present inventors intensively studied to solve the above-described problems and consequently discovered that the problems can be solved by incorporating a specific ratio of an oxalato complex anion and a PF₆⁻ anion and specific amounts of a symmetric chain carbonate and a chain carboxylic acid ester having a viscosity of 0.01 to 0.47 cP at 25°C, thereby arriving at the present invention. The present invention provides, for example, the following specific embodiments.
[1] A non-aqueous liquid electrolyte, comprising:
   an oxalato complex anion (A);
   LiPF₆; and
   a symmetric chain carbonate and a chain carboxylic acid ester having a viscosity of 0.01 to 0.47 cP at 25°C (C),
   wherein
   a ratio (A/B) of the content (mass) of the oxalato complex anion (A) with respect to the content (mass) of PF₆⁻ anion (B) is 0.0001 to 0.30, and
   a total content of the symmetric chain carbonate and the chain carboxylic acid ester having a viscosity of 0.01 to 0.47 cP at 25°C (C) is 1 to 45% by mass with respect to a total amount of the non-aqueous liquid electrolyte.
[2] The non-aqueous liquid electrolyte according to [1], wherein the content of the chain carboxylic acid ester having a viscosity of 0.01 to 0.47 cP at 25°C is 0.1 to 44% by mass (preferably 0.1 to 10% by mass, more preferably 0.1 to 5% by mass) with respect to a total amount of the non-aqueous liquid electrolyte.
[3] The non-aqueous liquid electrolyte according to [1] or [2], wherein the chain ester compound having a viscosity of 0.01 to 0.47 cP at 25°C is a compound represented by the following Formula (I):

   R¹COOCH₃ (I)

   (wherein, R¹ represents a hydrogen atom or an alkyl group having 1 or 2 carbon atoms, and a hydrogen atom bound to a carbon atom of the alkyl group is optionally substituted with a halogen atom).
[4] The non-aqueous liquid electrolyte according to [3], wherein R¹ in Formula (I) is a methyl group.
[5] The non-aqueous liquid electrolyte according to any one of [1] to [3], wherein the chain ester compound having a viscosity of 0.01 to 0.47 cP at 25°C is methyl acetate or methyl propionate.
[6] The non-aqueous liquid electrolyte according to any one of [1] to [3], wherein the chain ester compound having a viscosity of 0.01 to 0.47 cP at 25°C is methyl acetate.
[7] The non-aqueous liquid electrolyte according to any one of [1] to [6], further comprising an anion (D) having an FSO₂ skeleton as an auxiliary agent.
[8] The non-aqueous liquid electrolyte according to [7], wherein the anion (D) having an FSO₂ skeleton is a fluorosulfonate anion.
[9] The non-aqueous liquid electrolyte according to [7] or [8], wherein a ratio (A/D) of the content of the oxalato complex anion (A) with respect to the content of the anion (D) having an FSO₂ skeleton is 0.01 to 10 (preferably 0.01 to 1.5).
[10] The non-aqueous liquid electrolyte according to any one of [7] to [9], wherein the ratio (A/D) of the content of the oxalato complex anion (A) with respect to the content of the anion (D) having an FSO₂ skeleton is 0.01 to 0.7.
[11] The non-aqueous liquid electrolyte according to any one of [1] to [10], wherein a ratio of a total content (mass) of the symmetric chain carbonate and the chain carboxylic acid ester having a viscosity of 0.01 to 0.47 cP at 25°C (C) with respect to the content (mass) of the LiPF₆ is 0.01 to 3.5.
[12] The non-aqueous liquid electrolyte according to any one of [1] to [11], wherein the oxalato complex anion (A) is a non-fluorinated bis(oxalato)borate anion and/or a difluorobis(oxalato)phosphate anion.
[13] The non-aqueous liquid electrolyte according to any one of [1] to [12], wherein the oxalato complex anion (A) is a non-fluorinated bis(oxalato)borate anion.
[14] A non-aqueous liquid electrolyte battery, including:
   a positive electrode that contains a positive electrode active material capable of occluding and releasing metal anions;
   a negative electrode that contains a negative electrode active material capable of occluding and releasing metal anions; and
   the non-aqueous liquid electrolyte according to any one of [1] to [13].
[15] The non-aqueous liquid electrolyte battery according to [14], wherein the positive electrode active material comprises a lithium-transition metal compound represented by the following composition formula (3):

   Liₐ₁Ni_{b1}M_{c1}O₂ (3)

   (wherein, a1, b1, and c1 represent numerical values of 0.90 ≤ a1 ≤ 1.10, 0.20 ≤ b1 ≤ 0.98, and 0.01 ≤ c1 ≤ 0.50, respectively, and satisfy b1 + c1 = 1; and M represents at least one element selected from the group consisting of Co, Mn, Al, Mg, Zr, Fe, Ti, and Er).
[16] The non-aqueous liquid electrolyte battery according to [15], wherein M in the composition formula (3) comprises Mn.
[17] The non-aqueous liquid electrolyte battery according to any one of [14] to [16], wherein the negative electrode active material comprises a carbon-based material.
[18] The non-aqueous liquid electrolyte battery according to any one of [14] to [17], wherein a negative electrode active material layer in the negative electrode has a density of 0.8 to 1.7 g/cm³.
[19] The non-aqueous liquid electrolyte battery according to any one of [14] to [18], wherein the negative electrode active material layer in the negative electrode has a density of 0.8 to 1.4 g/cm³.
[20] The non-aqueous liquid electrolyte battery according to any one of [14] to [19], wherein the negative electrode active material layer in the negative electrode has a porosity of 10 to 80%.
[21] The non-aqueous liquid electrolyte battery according to any one of [14] to [20], wherein the negative electrode active material layer in the negative electrode has a porosity of 10 to 50%.

### EFFECTS OF THE INVENTION

According to the present invention, a non-aqueous liquid electrolyte that can inhibit a capacity loss during continuous charging can be provided. In addition, a non-aqueous liquid electrolyte secondary battery including the non-aqueous liquid electrolyte can be provided.

With regard to the reasons why a non-aqueous liquid electrolyte having the constitution of the present invention exerts such an excellent effect, the present inventors speculate as follows.

In the prior art disclosed in Patent Documents 1 to 3, the battery characteristics that achieve both protection of the negative electrode surface and a satisfactory electrical conductivity of a liquid electrolyte can be obtained by using a combination of a specific lithium salt additive and a specific solvent; however, since the specific solvent causes an increase in side reaction on the positive electrode surface, the capacity is deteriorated during continuous charging. In addition, in the prior art disclosed in Patent Document 4, decomposition of a lithium electrolyte on the negative electrode surface can be inhibited and the high-temperature battery characteristics can be improved by the use of plural lithium salt additives; however, since the lithium salt additives have a low degree of dissociation and a low lithium ion conductivity, excess lithium salt additives causes an increase in the overvoltage during battery charging, resulting in progress of increase in the resistance and deterioration of the capacity during continuous charging.

On the other hand, the present invention is characterized by incorporating a specific anion-containing lithium salt, which has a relatively high degree of dissociation among lithium salt additives, into a liquid electrolyte, and further incorporating a low-molecular-weight specific carboxylic acid ester and a symmetric chain carbonate at a specific concentration. The symmetric chain carbonate and the low-molecular-weight specific carboxylic acid ester both have a low viscosity and a high lithium conductivity; therefore, the use thereof within a specific concentration range can inhibit side reactions on the positive electrode surface. In addition, when the ratio of the above-described lithium salt additive-derived anion is in a specific range relative to PF₆⁻ anion derived from an electrolyte, since no excess Li salt additive remains and the effect of achieving both satisfactory lithium ion conduction in the liquid electrolyte and protection of the electrode surfaces is thus exerted prominently, a capacity loss of a non-aqueous liquid electrolyte secondary battery during continuous charging can be inhibited.

### DESCRIPTION OF THE EMBODIMENTS

Embodiments of the present invention will now be described in detail. It is noted here, however, that the following descriptions are merely examples (representative examples) of the embodiments of the present invention, and the present invention is not limited thereto within the scope of Claims.

The non-aqueous liquid electrolyte according to one embodiment of the present invention is a non-aqueous liquid electrolyte that contains: an oxalato complex anion (A); LiPF₆; and a symmetric chain carbonate and a chain carboxylic acid ester having a viscosity of 0.01 to 0.47 cP at 25°C (C), and is characterized in that a ratio (A/B) of the content (mass) of the oxalato complex anion (A) with respect to the content (mass) of PF₆⁻ anion (B) is 0.0001 to 0.30, and a total content of the symmetric chain carbonate and the chain carboxylic acid ester having a viscosity of 0.01 to 0.47 cP at 25°C (C) is 1 to 45% by mass with respect to a total amount of the non-aqueous liquid electrolyte. Each constitution will now be described.

### [1. Non-aqueous Liquid Electrolyte]

Similarly to a general non-aqueous liquid electrolyte, the non-aqueous liquid electrolyte according to one embodiment of the present invention contains an electrolyte and a non-aqueous solvent dissolving the electrolyte, and further contains an oxalato complex anion (A). Further, the non-aqueous liquid electrolyte is characterized by containing LiPF₆ as the above-described electrolyte, and a specific amount of a symmetric chain carbonate and a specific ester compound (C) as the above-described non-aqueous solvent. These constitutions will now each be described.

### [1-1. Oxalato Complex Anion (A)]

The non-aqueous liquid electrolyte according to the present embodiment contains an oxalato complex anion (A).

### (Counter Cation)

As a counter cation of the oxalato complex anion, a monovalent cation or a divalent cation can be used. The monovalent cation is preferably a lithium ion, a sodium ion, or a potassium ion, particularly preferably a lithium ion. The divalent cation is preferably a magnesium ion or a calcium ion, particularly preferably a magnesium ion. Any of these cations may be used singly, or in combination of two or more thereof. In the non-aqueous liquid electrolyte, the oxalato complex anion (A) is contained in the form of preferably an oxalato complex salt, more preferably an oxalato complex lithium salt.

### (Anion)

Preferred examples of the oxalato complex anion include:
oxalato complex oxalato borate anions, such as a difluorooxalato borate anion and a bis(oxalato)borate anion; and
oxalato phosphate anions, such as a tetrafluorooxalato phosphate anion, a difluorobis(oxalato)phosphate, and a tris(oxalato)phosphate.

Thereamong, from the standpoint of inhibiting an increase in the resistance during continuous charging, a bis(oxalato)borate anion or a bis(oxalato)phosphate anion is more preferred, a non-fluorinated bis(oxalato)borate anion or a difluorobis(oxalato)phosphate anion is still more preferred, and a non-fluorinated bis(oxalato)borate anion is particularly preferred. From the standpoint of protecting the electrode surfaces, an oxalato phosphate anion is more preferred, and a difluorobis(oxalato)phosphate anion is still more preferred.

The content of the oxalato complex anion (A) (a total content when two or more such anions are contained) is usually not less than 0.001% by mass, preferably not less than 0.01% by mass, but usually 5% by mass or less, preferably 3% by mass or less, more preferably 2% by mass or less, particularly preferably 1% by mass or less, with respect to a total amount of the non-aqueous liquid electrolyte.

The oxalato complex anion (A) is identified and the content thereof is measured by nuclear magnetic resonance (NMR) spectroscopy.

### [1-2. Electrolytes]

### [1-2-1. LiPF₆]

The non-aqueous liquid electrolyte according to the present embodiment contains LiPF₆.

The concentration of LiPF₆ in the non-aqueous liquid electrolyte is not particularly limited; however, it is usually 8% by mass or higher, preferably 8.5% by mass or higher, more preferably 9% by mass or higher, but usually 18% by mass or lower, preferably 17% by mass or lower, more preferably 16% by mass or lower, with respect to a total amount of the non-aqueous liquid electrolyte. When the concentration of LiPF₆ is in this range, the non-aqueous liquid electrolyte has an electrical conductivity appropriate for battery operation, so that sufficient output characteristics tend to be obtained.

### (Oxalato Complex Anion (A)/PF₆⁻ Anion (B))

In the present embodiment, a ratio (A/B) of the content (mass) of the oxalato complex anion (A) with respect to the content (mass) of PF₆⁻ anion (B) in the non-aqueous liquid electrolyte is 0.0001 to 0.30. A lower limit value of the ratio (A/B) is preferably not less than 0.001, more preferably not less than 0.01, particularly preferably not less than 0.03. Meanwhile, an upper limit value of the ratio (A/B) is preferably 0.25 or less, more preferably 0.20 or less, particularly preferably 0.15 or less.

When the ratio (A/B) is in this specific range, the effects obtained by the constitution of the present embodiment are exerted more prominently.

### [1-2-3. Other Electrolytes]

The non-aqueous liquid electrolyte according to one embodiment of the present invention may also contain an electrolyte other than an oxalato complex salt corresponding to the above-described " 1-1. Oxalato Complex Anion (A)" and LiPF₆. This electrolyte is not particularly limited as long as it is known to be used in this application; however, a lithium salt is usually used.

Examples of the lithium salt include those other than an oxalato complex salt corresponding to the above-described "1-1. Oxalato Complex Anion (A)" and LiPF₆, such as lithium tungstates, lithium carboxylates, lithium sulfonates, lithium imide salts, lithium methide salts, and fluorine-containing organic lithium salts.

Thereamong, for example, lithium sulfonates such as CH₃SO₃Li; lithium imide salts, such as LiN(FSO₂)₂, LiN(CF₃SO₂)₂, lithium cyclic 1,2-perfluoroethane disulfonylimide, and lithium cyclic 1,3-perfluoropropane disulfonylimide; and lithium methide salts, such as LiC(CF₃SO₂)₃ and LiC(C₂F₅SO₂)₃, are more preferred since these lithium salts have an effect of improving the low-temperature output characteristics, the high-rate charge-discharge characteristics, the impedance characteristics, the high-temperature storage characteristics, the cycle characteristics, and the like.

Preferred examples of a combination of LiPF₆ and an electrolyte salt include, but not particularly limited to: LiPF₆ and LiN(CF₃SO₂)₂.

When the non-aqueous liquid electrolyte contains other electrolyte, a total concentration thereof is not particularly limited; however, it is usually 8% by mass or higher, preferably 8.5% by mass or higher, more preferably 9% by mass or higher, but usually 18% by mass or lower, preferably 17% by mass or lower, more preferably 16% by mass or lower, still more preferably 15% by mass or lower, with respect to a total amount of the non-aqueous liquid electrolyte. When the total concentration of other electrolyte is in this range, the non-aqueous liquid electrolyte has an electrical conductivity appropriate for battery operation, so that sufficient output characteristics tend to be obtained.

### [1-3. Non-aqueous Solvent]

### [1-3-1. Specific Non-aqueous Solvent (C)]

The non-aqueous liquid electrolyte according to the present embodiment contains (C) a symmetric chain carbonate and a chain carboxylic acid ester having a viscosity of 0.01 to 0.47 cP at 25°C (hereinafter, also referred to as "specific non-aqueous solvent (C)"), and a total content of the specific non-aqueous solvent (C) in the non-aqueous liquid electrolyte is 1 to 45% by mass.

The total content of the specific non-aqueous solvent (C) in the non-aqueous liquid electrolyte is preferably not less than 5% by mass, more preferably not less than 10% by mass, still more preferably not less than 15% by mass, particularly preferably not less than 20% by mass. Meanwhile, the total content of the specific non-aqueous solvent (C) in the non-aqueous liquid electrolyte is preferably 43% by mass or less, more preferably 40% by mass or less, still more preferably 38% by mass or less, particularly preferably 35% by mass or less. When the total content of the specific non-aqueous solvent (C) is in the above-described range, a good balance is obtained between the electrode surface protection by an auxiliary agent and the lithium ion conduction, so that the effect of improving the charging characteristics of a non-aqueous liquid electrolyte secondary battery can be exerted efficiently.

### [1-3-1-1. Chain Carboxylic Acid Ester Having Viscosity of 0.01 to 0.47 cP at 25°C]

In the present specification, the "chain carboxylic acid ester having a viscosity of 0.01 to 0.47 cP at 25°C" refers to a chain carboxylic acid ester compound that has a viscosity, which is determined by an Ubbelohde viscometer and a vibratory densimeter, of 0.01 to 0.47 cP at 25°C.

Preferred specific examples of the chain carboxylic acid ester having a viscosity of 0.01 to 0.47 cP at 25°C include compounds represented by the following Formula (I):

R¹COOCH₃ (I)

In Formula (I), R¹ represents a hydrogen atom or an alkyl group having 1 or 2 carbon atoms, and a hydrogen atom bound to a carbon atom of the alkyl group is optionally substituted with a halogen atom.

R¹ is, for example, a methyl group, an ethyl group, a difluoromethyl group, a trifluoromethyl group, or a 2,2,2-trifluoroethyl group, preferably a methyl group or an ethyl group, more preferably a methyl group. Preferred specific examples of the compound represented by Formula (I) include methyl acetate and methyl propionate.

The content of the chain carboxylic acid ester in the non-aqueous liquid electrolyte is preferably not less than 0.1% by mass, more preferably not less than 0.5% by mass, still more preferably not less than 1% by mass, but preferably 44% by mass or less, more preferably 30% by mass or less, still more preferably 15% by mass or less, particularly preferably 10% by mass or less, yet still more preferably 5% by mass or less, with respect to a total amount of the non-aqueous liquid electrolyte. When the content of the chain carboxylic acid ester is in this range, the non-aqueous liquid electrolyte has a viscosity in an appropriate range and a reduction in the electrical conductivity is avoided, so that the charge-discharge characteristic of a non-aqueous liquid electrolyte secondary battery can be improved.

The above-described chain carboxylic acid ester may be used singly, or two or more thereof may be used in any combination at any ratio. When two or more chain carboxylic acid esters are used in combination, a total content thereof should satisfy the above-described range.

The chain carboxylic acid ester having a viscosity of 0.01 to 0.47 cP at 25°C is identified and the content thereof is measured by gas chromatography.

### (Method of Measuring Viscosity at 25°C)

The viscosity at 25°C is measured using an Ubbelohde viscometer and a vibratory densimeter.

### [1-3-1-2. Symmetric Chain Carbonate]

In the present specification, the "symmetric chain carbonate" refers to a compound that has a bilaterally symmetrical chemical structure about a carbonate group.

Specific examples of the symmetric chain carbonate include carbonate compounds represented by the following Formula (II):

R²O-(C=O)-OR² (II)

In Formula (II), R² represents an alkyl group, and a hydrogen atom bound to a carbon atom of the alkyl group is optionally substituted with a halogen atom.

R² is, for example, a methyl group, an ethyl group, a difluoromethyl group, a trifluoromethyl group, or a 2,2,2-trifluoroethyl group and, from the standpoint of obtaining a low viscosity, R² is preferably a methyl group or an ethyl group, more preferably a methyl group. Preferred specific examples of the compound represented by Formula (II) include dimethyl carbonate, diethyl carbonate, di-n-propyl carbonate, and diisopropyl carbonate, among which dimethyl carbonate or diethyl carbonate is preferred, and dimethyl carbonate is more preferred.

### (Content)

The content of the symmetric chain carbonate in the non-aqueous liquid electrolyte is preferably not less than 1% by mass, more preferably not less than 10% by mass, particularly preferably not less than 20%, but preferably less than 45% by mass, more preferably 40% by mass or less, still more preferably 35% by mass or less, with respect to a total amount of the non-aqueous liquid electrolyte. When the content of the symmetric chain carbonate is in this range, the non-aqueous liquid electrolyte exhibits an appropriate viscosity over a broad temperature range and a reduction in the electrical conductivity is avoided, so that the charge-discharge characteristic of a non-aqueous liquid electrolyte secondary battery can be improved.

The symmetric chain carbonate is identified and the content thereof is measured by gas chromatography.

### (Specific Non-aqueous Solvent (C)/LiPF₆)

In the present embodiment, a ratio of the content (mass) of the above-described specific non-aqueous solvent (C) with respect to the content (mass) of LiPF₆ in the non-aqueous liquid electrolyte is 0.01 to 3.5. A lower limit value of this ratio is preferably not less than 0.01, more preferably not less than 0.05, particularly preferably not less than 0.1. Meanwhile, an upper limit value of the ratio is preferably 0.25 or less, more preferably 3.0 or less, particularly preferably 2.8.

When the ratio of the content of the specific non-aqueous solvent (C) with respect to the content of LiPF₆ in the non-aqueous liquid electrolyte is in this specific range, the effects obtained by the constitution of the present embodiment are exerted more prominently.

### [1-3-2. Other Non-aqueous Solvents]

Further, similarly to a general non-aqueous liquid electrolyte, the non-aqueous liquid electrolyte according to the present embodiment may also contain a non-aqueous solvent other than the above-described symmetric chain carbonate and the above-described chain carboxylic acid ester having a viscosity of 0.01 to 0.47 cP at 25°C (C), within a range that does not impair the effects of the invention according to the present embodiment. The non-aqueous solvent to be used is not particularly limited as long as it dissolves the above-described electrolytes, and any known organic solvent can be used.

Examples of the organic solvent include, but not particularly limited to: a saturated cyclic carbonate, an asymmetric chain carbonate, a chain carboxylic acid ester not having a viscosity of 0.01 to 0.47 cP at 25°C (hereinafter, also referred to as "other chain carboxylic acid ester"), a cyclic carboxylic acid ester, an ether-based compound, and a sulfone-based compound. These organic solvents may be used singly, or in combination of two or more thereof.

Examples of a combination of two or more organic solvents include, but not particularly limited to: a saturated cyclic carbonate and an asymmetric chain carbonate; a cyclic carboxylic acid ester and an asymmetric chain carbonate; and a saturated cyclic carbonate, an asymmetric chain carbonate, and other chain carboxylic acid ester. Thereamong, a combination of a saturated cyclic carbonate and an asymmetric chain carbonate, and a combination of a saturated cyclic carbonate, an asymmetric chain carbonate, and other chain carboxylic acid ester are preferred.

### [1-3-2-1. Saturated Cyclic Carbonate]

The saturated cyclic carbonate is, for example, one having an alkylene group having 2 to 4 carbon atoms and, from the standpoint of attaining an improvement in the battery characteristics that is attributed to an increase in the degree of lithium ion dissociation, a saturated cyclic carbonate having 2 or 3 carbon atoms is preferably used.

Specific examples of the saturated cyclic carbonate include ethylene carbonate, propylene carbonate, and butylene carbonate. Thereamong, ethylene carbonate or propylene carbonate is preferred, and ethylene carbonate, which is unlikely to be oxidized or reduced, is more preferred. Any of these saturated cyclic carbonates may be used singly, or two or more thereof may be used in any combination at any ratio.

The content of the saturated cyclic carbonate is not particularly limited and may be set arbitrarily as long as the effects of the invention according to the present embodiment are not markedly impaired; however, it is usually not less than 3% by volume, preferably not less than 5% by volume, but usually 90% by volume or less, preferably 85% by volume or less, more preferably 80% by volume or less, with respect to a total non-aqueous solvent amount of the non-aqueous liquid electrolyte. By controlling the content of the saturated cyclic carbonate to be in this range, a decrease in the electrical conductivity of the non-aqueous liquid electrolyte caused by a reduction in the dielectric constant is avoided, so that the high-current discharge characteristics of a non-aqueous liquid electrolyte secondary battery, the stability to a negative electrode, and the cycle characteristics are all likely to be obtained in favorable ranges. In addition, the resistance of the non-aqueous liquid electrolyte against oxidation and reduction is improved, so that the stability during high-temperature storage tends to be improved.

It is noted here that, in the present embodiment, "% by volume" means a volume at 25°C and 1 atm.

### [1-3-2-2. Asymmetric Chain Carbonate]

As the asymmetric chain carbonate, one having 4 to 7 carbon atoms is usually used and, for the purpose of adjusting the viscosity of the liquid electrolyte to be in an appropriate range, a chain carbonate having 4 or 5 carbon atoms is preferably used.

Specific examples of the asymmetric chain carbonate include n-propyl isopropyl carbonate, ethyl methyl carbonate, and methyl-n-propyl carbonate. The asymmetric chain carbonate is particularly preferably ethyl methyl carbonate.

Further, a fluorine atom-containing asymmetric chain carbonate (hereinafter, may be simply referred to as "fluorinated asymmetric chain carbonate") can be preferably used as well. The number of fluorine atoms in the fluorinated asymmetric chain carbonate is not particularly limited as long as it is one or more; however, it is usually 6 or less, preferably 4 or less. When the fluorinated asymmetric chain carbonate has plural fluorine atoms, these plural fluorine atoms may be bound to the same carbon, or may be bound to different carbons.

Examples of the fluorinated asymmetric chain carbonate include: fluorinated dimethyl carbonate derivatives, such as fluoromethyl methyl carbonate; fluorinated ethyl methyl carbonate derivatives, such as 2-fluoroethyl methyl carbonate; and fluorinated diethyl carbonate derivatives, such as ethyl-(2-fluoroethyl) carbonate.

Any of these asymmetric chain carbonates may be used singly, or two or more thereof may be used in any combination at any ratio.

The content of the asymmetric chain carbonate is not particularly limited; however, it is usually not less than 15% by volume, preferably not less than 20% by volume, more preferably not less than 25% by volume, but usually 90% by volume or less, preferably 85% by volume or less, more preferably 80% by volume or less, with respect to a total non-aqueous solvent amount of the non-aqueous liquid electrolyte. By controlling the content of the asymmetric chain carbonate to be in this range, the viscosity of the non-aqueous liquid electrolyte is kept in an appropriate range and a reduction in the ionic conductivity is inhibited, as a result of which the output characteristics of a non-aqueous liquid electrolyte secondary battery are likely to be obtained in favorable ranges.

### (Combination with Non-Fluorinated Carbonate)

The non-aqueous liquid electrolyte according to one embodiment of the present invention preferably contains a non-fluorinated cyclic carbonate and/or a non-fluorinated asymmetric chain carbonate.

Particularly, from the standpoint of markedly improving the battery performance, the non-aqueous liquid electrolyte more preferably contains a combination of ethylene carbonate or propylene carbonate and ethyl methyl carbonate, still more preferably contains a combination of ethylene carbonate and ethyl methyl carbonate.

The content of the non-fluorinated cyclic carbonate and the non-fluorinated asymmetric chain carbonate is not particularly limited and may be set arbitrarily as long as the effects of the invention according to the present embodiment are not markedly impaired. The content of ethylene carbonate is usually not less than 15% by volume, preferably not less than 20% by volume, but usually 45% by volume or less, preferably 40% by volume or less, with respect to a total non-aqueous solvent amount of the non-aqueous liquid electrolyte. The content of ethyl methyl carbonate is usually not less than 20% by volume, preferably not less than 30% by volume, but usually 50% by volume or less, preferably 45% by volume or less, with respect to a total non-aqueous solvent amount of the non-aqueous liquid electrolyte. By controlling the content of ethylene carbonate and that of ethyl methyl carbonate to be in the above-described respective ranges, excellent high-temperature stability is obtained and gas generation tends to be inhibited.

### [1-3-2-3. Other Chain Carboxylic Acid Ester]

Examples of the other chain carboxylic acid ester include propyl acetate, butyl acetate, ethyl propionate, propyl propionate, methyl butyrate, ethyl butyrate, methyl valerate, methyl isobutyrate, ethyl isobutyrate, and methyl pivalate. Thereamong, propyl acetate or butyl acetate is preferred from the standpoint of improving the battery characteristics. Chain carboxylic acid esters (e.g., ethyl trifluoroacetate) obtained by substituting some of the hydrogen atoms of the above-described compounds with fluorine atoms can be suitably used as well.

The content of the other chain carboxylic acid ester is usually not less than 1% by volume, preferably not less than 5% by volume, more preferably not less than 15% by volume, with respect to a total non-aqueous solvent amount. When the content of the other chain carboxylic acid ester is in this range, the electrical conductivity of the non-aqueous liquid electrolyte is increased, so that the high-current discharge characteristics of a non-aqueous liquid electrolyte battery are likely to be improved. Meanwhile, the content of the chain carboxylic acid ester is usually 70% by volume or less, preferably 50% by volume or less, more preferably 40% by volume or less. By setting an upper limit in this manner, the viscosity of the non-aqueous liquid electrolyte is kept in an appropriate range and a reduction in the electrical conductivity is avoided, so that an increase in the negative electrode resistance is inhibited and the high-current discharge characteristics of a non-aqueous liquid electrolyte secondary battery are likely to be attained in favorable ranges.

### [1-3-2-4. Cyclic Carboxylic Acid Ester]

Examples of the cyclic carboxylic acid ester include *γ*-butyrolactone and *γ*-valerolactone. Thereamong, *γ*-butyrolactone is more preferred. Cyclic carboxylic acid esters obtained by substituting some of the hydrogen atoms of the above-described compounds with fluorine atoms can be suitably used as well. The content of the cyclic carboxylic acid ester is usually not less than 1% by volume, preferably not less than 5% by volume, more preferably not less than 15% by volume, with respect to a total non-aqueous solvent amount. When the content of the cyclic carboxylic acid ester is in this range, the electrical conductivity of the non-aqueous liquid electrolyte is increased, so that the high-current discharge characteristics of a non-aqueous liquid electrolyte battery are likely to be improved. Meanwhile, the content of the cyclic carboxylic acid ester is usually 70% by volume or less, preferably 50% by volume or less, more preferably 40% by volume or less. By setting an upper limit in this manner, the viscosity of the non-aqueous liquid electrolyte is kept in an appropriate range and a reduction in the electrical conductivity is avoided, so that an increase in the negative electrode resistance is inhibited and the high-current discharge characteristics of a non-aqueous liquid electrolyte secondary battery are likely to be attained in favorable ranges.

### [1-3-2-5. Ether-Based Compound]

The ether-based compound is preferably a chain ether having 3 to 10 carbon atoms, such as dimethoxymethane, diethoxymethane, ethoxymethoxymethane, ethylene glycol di-n-propyl ether, ethylene glycol di-n-butyl ether or diethylene glycol dimethyl ether, or a cyclic ether having 3 to 6 carbon atoms, such as tetrahydrofuran, 2-methyltetrahydrofuran, 3-methyltetrahydrofuran, 1,3-dioxane, 2-methyl-1,3-dioxane, 4-methyl-1,3-dioxane, or 1,4-dioxane. It is noted here that some of the hydrogen atoms in these ether-based compounds may be substituted with fluorine atoms.

Among the above-described ether-based compounds, as the chain ether having 3 to 10 carbon atoms, dimethoxymethane, diethoxymethane, and ethoxymethoxymethane are preferred since they not only have a high solvating capacity with lithium ions and thus improve the ion dissociation, but also have a low viscosity and provide a high ionic conductivity. As the cyclic ether having 3 to 6 carbon atoms, for example, tetrahydrofuran, 1,3-dioxane, and 1,4-dioxane are preferred since they provide a high ionic conductivity.

The content of the ether-based compound is not particularly limited and may be set arbitrarily as long as the effects of the invention according to the present embodiment are not markedly impaired; however, it is usually not less than 1% by volume, preferably not less than 2% by volume, more preferably not less than 3% by volume, but usually 30% by volume or less, preferably 25% by volume or less, more preferably 20% by volume or less, with respect to a total non-aqueous solvent amount. When the content of the ether-based compound is in this preferred range, an ionic conductivity-improving effect of ether, which is attributed to an increase in the degree of lithium ion dissociation and a reduction in the viscosity, is likely to be ensured. In addition, when a carbonaceous material is used as a negative electrode active material, the phenomenon of co-intercalation of a chain ether thereto along with lithium ions can be inhibited; therefore, the input-output characteristics and the charge-discharge rate characteristics can be attained in appropriate ranges.

### [1-3-2-6. Sulfone-Based Compound]

The sulfone-based compound is not particularly limited and may be a cyclic sulfone or a chain sulfone. In the case of a cyclic sulfone, the number of its carbon atoms is usually 3 to 6, preferably 3 to 5, while in the case of a chain sulfone, the number of its carbon atoms is usually 2 to 6, preferably 2 to 5. The number of sulfonyl groups in one molecule of the sulfone-based compound is also not particularly limited; however, it is usually 1 or 2.

Examples of the cyclic sulfone include: monosulfone compounds, such as trimethylene sulfones, tetramethylene sulfones, and hexamethylene sulfones; and disulfone compounds, such as trimethylene disulfones, tetramethylene disulfones, and hexamethylene disulfones. Thereamong, from the standpoints of the dielectric constant and the viscosity, tetramethylene sulfones, tetramethylene disulfones, hexamethylene sulfones, and hexamethylene disulfones are more preferred, and tetramethylene sulfones (sulfolanes) are particularly preferred.

Examples of the sulfolanes include sulfolane and sulfolane derivatives. As the sulfolane derivatives, those in which one or more hydrogen atoms bound to carbon atoms constituting a sulfolane ring are each substituted with a fluorine atom, an alkyl group, or a fluorine-substituted alkyl group are preferred.

Thereamong, for example, 2-methyl sulfolane, 3-methyl sulfolane, 2-fluorosulfolane, 3-fluorosulfolane, 2,3-difluorosulfolane, 2-trifluoromethyl sulfolane, and 3-trifluoromethyl sulfolane are preferred from the standpoint of obtaining a liquid electrolyte with a high ionic conductivity and a battery with a high input/output.

Examples of the chain sulfone include dimethyl sulfone, ethyl methyl sulfone, diethyl sulfone, monofluoromethyl methyl sulfone, difluoromethyl methyl sulfone, trifluoromethyl methyl sulfone, and pentafluoroethyl methyl sulfone. Thereamong, dimethyl sulfone, ethyl methyl sulfone, and monofluoroethyl methyl sulfone are preferred from the standpoint of improving the high-temperature storage stability of the liquid electrolyte.

The content of the sulfone-based compound is not particularly limited and may be set arbitrarily as long as the effects of the invention according to the present embodiment are not markedly impaired; however, it is usually not less than 0.3% by volume, preferably not less than 0.5% by volume, more preferably not less than 1% by volume, but usually 40% by volume or less, preferably 35% by volume or less, more preferably 30% by volume or less, with respect to a total non-aqueous solvent amount of the non-aqueous liquid electrolyte. When the content of the sulfone-based compound is in this range, a liquid electrolyte having excellent high-temperature storage stability tends to be obtained.

### [1-4. Auxiliary Agent]

The non-aqueous liquid electrolyte according to the present embodiment may also contain a variety of auxiliary agents within a range that does not markedly impair the effects of the invention according to the present embodiment. As the auxiliary agents, conventionally known auxiliary agents can be used arbitrarily. Any of such auxiliary agents may be used singly, or two or more thereof may be used in any combination at any ratio.

Examples of the auxiliary agents that may be incorporated into the non-aqueous liquid electrolyte include a cyclic carbonate having an unsaturated carbon-carbon bond, a fluorine-containing cyclic carbonate, an isocyanate group-containing compound, a compound having an isocyanurate skeleton, a sulfur-containing organic compound, a phosphorus-containing organic compound, a cyano group-containing organic compound, a silicon-containing compound, an aromatic compound, an ether bond-containing cyclic compound, a carboxylic acid anhydride, a borate anion without an oxalate skeleton, an anion having an FSO₂ skeleton, a monofluorophosphate anion, a difluorophosphate anion. Examples the auxiliary agents also include those compounds that are described in WO 2015/111676.

An ether bond-containing cyclic compound can be used as an auxiliary agent in the non-aqueous liquid electrolyte, and encompasses those that can be used as non-aqueous solvents as described above in "1-3. Non-aqueous Solvents". When an ether bond-containing cyclic compound is used as an auxiliary agent, it is used in an amount of less than 1% by volume.

The content of an auxiliary agent is not particularly limited, and may be set arbitrarily as long as the effects of the present invention are not markedly impaired; however, it is usually not less than 0.001% by mass, preferably not less than 0.01% by mass, more preferably not less than 0.1% by mass, but usually 10% by mass or less, preferably 5% by mass or less, more preferably 3% by mass or less, still more preferably 1% by mass or less, particularly preferably less than 1% by mass, with respect to a total amount of the non-aqueous liquid electrolyte.

### [1-4-1. Anion (D) Having FSO₂ Skeleton]

The non-aqueous liquid electrolyte according to the present embodiment preferably contains an anion (D) having an FSO₂ skeleton as an auxiliary agent.

### (Counter Cation)

As a counter cation of the anion (D) having an FSO₂ skeleton, a monovalent cation or a divalent cation can be used. The monovalent cation is preferably a lithium ion, a sodium ion, or a potassium ion, particularly preferably a lithium ion. The divalent cation is preferably a magnesium ion or a calcium ion, particularly preferably a magnesium ion. These cations may be used singly, or in combination of two or more thereof. In the non-aqueous liquid electrolyte, the anion (D) having an FSO₂ skeleton is contained in the form of preferably a salt having an FSO₂ skeleton, more preferably an anion lithium salt having an FSO₂ skeleton.

### (Anion)

Examples of the anion (D) having an FSO₂ skeleton include:
fluorosulfonate anions, such as FSO₃⁻;
fluorosulfonyl imide anions, such as (FSO₂)₂N⁻, (FSO₂)(CF₃SO₂)N⁻, (FSO₂)(F₂PO)N⁻, and (FSO₂)(FPO₂)N²⁻; and
fluorosulfonyl methide anions, such as (FSO₂)₃C⁻(FSO₂)₃C⁻.

From the standpoint of inhibiting an increase in the resistance during continuous charging, a fluorosulfonate anion is preferred.

The content of the anion (D) having an FSO₂ skeleton (a total content when two or more anions (D) are used) is not less than 0.001% by mass, preferably not less than 0.01% by mass, but 5% by mass or less, preferably 3% by mass or less, more preferably 2% by mass or less, particularly preferably 1% by mass or less, with respect to a total amount of the non-aqueous liquid electrolyte.

The anion (D) having an FSO₂ skeleton is identified and the content thereof is measured by nuclear magnetic resonance (NMR) spectroscopy.

### (Oxalato Complex Anion (A)/Anion (D) Having FSO₂ Skeleton)

In the present embodiment, a ratio (A/D) of the content of the oxalato complex anion (A) with respect to the content of the anion (D) having an FSO₂ skeleton in the non-aqueous liquid electrolyte is usually 0.01 to 10. A lower limit value of the ratio (A/D) is preferably not less than 0.03, more preferably not less than 0.05, still more preferably not less than 0.1, particularly preferably not less than 0.5. Meanwhile, an upper limit value of the ratio (A/D) is preferably 5 or less, more preferably 1.5 or less, still more preferably 1.1 or less, particularly preferably 0.7.

When the ratio of the content of the oxalato complex anion (A) with respect to the content of the anion (D) having an FSO₂ skeleton in the non-aqueous liquid electrolyte is in this specific range, the effects obtained by the constitution of the present embodiment are exerted more prominently.

### [2. Non-aqueous Liquid Electrolyte Secondary Battery]

The non-aqueous liquid electrolyte secondary battery according to one embodiment of the present invention is a non-aqueous liquid electrolyte secondary battery including: a positive electrode that contains a positive electrode active material capable of occluding and releasing metal anions; and a negative electrode that contains a negative electrode active material capable of occluding and releasing metal anions, and the non-aqueous liquid electrolyte secondary battery contains a non-aqueous liquid electrolyte.

### [2-1. Non-aqueous Liquid Electrolyte]

As the non-aqueous liquid electrolyte, the above-described non-aqueous liquid electrolyte is used. It is noted here that the above-described non-aqueous liquid electrolyte can also be mixed with other non-aqueous liquid electrolyte within a range that does not depart from the gist of the invention according to the present embodiment.

### [2-2. Negative Electrode]

The negative electrode includes: a negative electrode active material layer containing a negative electrode active material and a binder; and a current collector.

### [2-2-1. Negative Electrode Active Material]

The negative electrode active material used in the negative electrode is not particularly limited as long as it is capable of electrochemically occluding and releasing metal ions. Specific examples of the negative electrode active material include carbon-based materials, materials containing a Li-alloyable metal element and/or metalloid element, lithium-containing metal composite oxide materials, and mixtures of these materials. Thereamong, it is preferred to use a carbon-based material since it provides good cycle characteristics and good safety, as well as excellent continuous charging characteristics. Any of the above-described materials may be used singly, or two or more thereof may be used in any combination.

### [2-2-1-1. Carbon-Based Material]

Examples of the carbon-based material include natural graphite, artificial graphite, amorphous carbon, carbon-coated graphite, graphite-coated graphite, and resin-coated graphite. Thereamong, natural graphite is preferred. Any of these carbon-based materials may be used singly, or two or more thereof may be used in any combination at any ratio.

Examples of the natural graphite include scaly graphite, flake graphite, and graphite particles obtained by performing a treatment, such as spheronization or densification, on any of these graphites. Thereamong, spherical or ellipsoidal graphite particles obtained by a spheronization treatment are particularly preferred from the standpoints of the packing property of the particles and the charge-discharge rate characteristics.

The average particle size (d50) of the graphite particles is usually 1 µm to 100 µm.

### [2-2-1-2. Physical Properties of Carbon-Based Material]

The carbon-based material used as the negative electrode active material preferably satisfies at least one of the below-described characteristics (1) to (4) relating to physical properties, shape and the like, and more preferably satisfies a plurality of the below-described characteristics (1) to (4) at the same time.

### (1) X-ray Diffraction Parameter

The value of d (interlayer distance) between lattice planes ((002) planes) of the carbon-based material, which is determined by X-ray diffractometry in accordance with the method of the Japan Society for the Promotion of Science, is usually 0.335 nm to 0.360 nm. Further, the crystallite size (Lc) of the carbon-based material, which is determined by X-ray diffractometry in accordance with the method of the Japan Society for the Promotion of Science, is usually 1.0 nm or larger.

### (2) Volume-Based Average Particle Size

The volume-based average particle size of the carbon-based material is an average particle size (median diameter) based on volume that is determined by a laser diffraction-scattering method, and it is usually 1 µm to 100 µm.

### (3) Raman R Value and Raman Half-Value Width

The Raman R value of the carbon-based material is a value determined by argon ion laser Raman spectrometry, and it is usually 0.01 to 1.5.

The Raman half-value width of the carbon-based material at about 1,580 cm⁻¹ is not particularly limited; however, it is usually 10 cm⁻¹ to 100 cm⁻¹.

### (4) BET Specific Surface Area

The BET specific surface area of the carbon-based material is a value of the specific surface area determined by a BET method, and it is usually 0.1 m²·g⁻¹ to 100 m²·g⁻¹.

Two or more carbon-based materials that are different in characters may be contained in the negative electrode active material. The term "characters" used herein means the X-ray diffraction parameter, the volume-based average particle size, the Raman R value, the Raman half-value width, and the BET specific surface area.

Preferred examples of such a case include one in which the carbon-based materials have a volume-based particle size distribution that is not bilaterally symmetrical about the median diameter, one in which two or more carbon-based materials having different Raman R values are contained, and one in which two or more carbon-based materials having different X-ray parameters are contained.

### [2-2-1-3. Material Containing Li-alloyable Metal Element and/or Metalloid Element]

As particles containing a Li-alloyable metal element and/or metalloid element, any conventionally known such particles can be used; however, from the standpoints of the capacity and the cycle life, the particles are preferably those of, for example, a simple substance or compound of a metal and/or metalloid element selected from the group consisting of Sb, Si, Sn, Al, As, and Zn. Further, when the material containing a Li-alloyable metal element and/or metalloid element contains two or more elements, the material may be an alloy material composed of an alloy of these metals.

Examples of the material of a Li-alloyable metal element and/or metalloid element include oxides, nitrides, and carbides. These materials may contain two or more Li-alloyable metal elements and/or metalloid elements.

Particularly, from the standpoint of increasing the capacity, Si metal (hereinafter, may be referred to as "Si") or an Si-containing inorganic compound is preferred.

The material of a Li-alloyable metal element and/or metalloid element may already be alloyed with Li at the time of the production of the below-described negative electrode.

In the present specification, Si and an Si-containing inorganic compound are collectively referred to as "Si compound". Specific examples of an Si compound include SiOₓ (0 ≤ x ≤ 2). Specific examples of a metal compound alloyed with Li include Li_{y}Si (0 < y ≤ 4.4) and Li₂SiO_{2+z} (0 < z ≤ 2). The Si compound is preferably an Si oxide (SiOₓ₁, 0 < x1 ≤ 2) because of its higher theoretical capacity than graphite, or amorphous Si or nano-sized Si crystals from the standpoint of facilitating the migration of alkali ions such as lithium ions to obtain a high capacity.

When the material containing a Li-alloyable metal element and/or metalloid element is in the form of particles, from the standpoint of the cycle life, the average particle size (d50) thereof is usually 0.01 µm to 10 µm.

### [2-2-1-4. Mixture of Material Containing Li-alloyable Metal Element and/or Metalloid Element and Carbon-based Material]

A mixture of a material containing a Li-alloyable metal element and/or metalloid element and a carbon-based material, which is used as the negative electrode active material, may be a mixture in which the above-described material containing a Li-alloyable metal element and/or metalloid element and the above-described carbon-based material are mixed in a state of mutually independent particles, or may be a composite in which the material containing a Li-alloyable metal element and/or metalloid element exists on the surface or the inside of the carbon-based material.

The content ratio of the material containing a Li-alloyable metal element and/or metalloid element with respect to a total amount of the material containing a Li-alloyable metal element and/or metalloid element and the carbon-based material is usually 1% by mass to 99% by mass.

### [2-2-1-5. Lithium-Containing Metal Composite Oxide Material]

A lithium-containing metal composite oxide material used as the negative electrode active material is not particularly limited as long as it is capable of occluding and releasing lithium ions; however, from the standpoint of the high-current-density charge-discharge characteristics, it is preferably a lithium-containing composite metal oxide material that contains titanium, more preferably a composite oxide of lithium and titanium (hereinafter, may be simply referred to as "lithium-titanium composite oxide"), and a lithium-titanium composite oxide having a spinel structure is particularly preferred since it greatly reduces the output resistance.

In addition, in the lithium-titanium composite oxide, lithium and/or titanium may be substituted with other metal element, for example, at least one element selected from the group consisting of Al, Ga, Cu, and Zn.

As the lithium-titanium composite oxide, Li_{4/3}Ti_{5/3}O₄, Li₁Ti₂O₄, and Li_{4/5}Ti_{11/5}O₄ are preferred. Further, as a lithium-titanium composite oxide in which lithium and/or titanium is/are partially substituted with other element, for example, Li_{4/3}Ti_{4/3}Al_{1/3}O₄ is preferred.

### [2-2-1-6. Surface Coating of Negative Electrode Active Material]

The negative electrode active material may be used in the form that a substance (surface adhering substance) having a composition different from that of the negative electrode active material is adhered to the surface. Examples of the surface adhering substance include oxides such as aluminum oxide, sulfates such as lithium sulfate, and carbonates such as lithium carbonate.

These surface adhering substances can be adhered to the surface of the negative electrode active material by, for example, a method in which each surface adhering substance is dissolved or suspended in a solvent and the resulting solution or suspension is added to and impregnated into the negative electrode active material, followed by drying.

A surface adhering substance is used in an amount of preferably not less than 1 µmol/g or not less than 10 µmol/g, but usually 1 mmol/g or less, with respect to the amount of the positive electrode active material.

In the present specification, a negative electrode active material onto the surface of which the above-described surface adhering substance is adhered is also referred to as "negative electrode active material".

### [2-2-2. Constitution and Production Method of Negative Electrode]

For the production of the negative electrode, any known method can be employed as long as it does not markedly impair the effects of the present invention. For example, a binder, a solvent such as an aqueous solvent or an organic solvent, and, as required, a thickening agent, a conductive material, a filler and the like are added to the negative electrode active material to prepare a slurry, and this slurry is subsequently applied and dried onto a current collector, followed by pressing of the resultant to form a negative electrode active material layer, whereby the negative electrode can be formed. In this process, it is preferred to perform consolidation by means of hand pressing, roller pressing or the like so as to increase the packing density of the negative electrode active material.

### [2-2-2-1. Content of Active Material]

The content of the negative electrode active material in the negative electrode active material layer is usually 80% by mass to 99.5% by mass.

### [2-2-2-2. Thickening Agent]

The thickening agent is usually used for the purpose of adjusting the viscosity of the slurry. The thickening agent is not particularly limited, and specific examples thereof include carboxymethyl cellulose, methyl cellulose, hydroxymethyl cellulose, ethyl cellulose, and polyvinyl alcohol. Any of these thickening agents may be used singly, or two or more thereof may be used in any combination at any ratio.

When a thickening agent is used, the ratio thereof with respect to the negative electrode active material is usually 0.1% by mass to 5% by mass.

### [2-2-2-3. Binder]

The binder used for binding the negative electrode active material is not particularly limited as long as it is a material that is stable against the non-aqueous liquid electrolyte and the solvent used in the electrode production.

Specific examples of the binder include: rubbery polymers, such as SBR (styrene-butadiene rubbers), isoprene rubbers, butadiene rubbers, fluororubbers, NBR (acrylonitrile-butadiene rubbers), and ethylene-propylene rubbers; and fluorine-based polymers, such as polyvinylidene fluoride, polytetrafluoroethylene, and tetrafluoroethylene-ethylene copolymers. Any of these binders may be used singly, or two or more thereof may be used in any combination at any ratio.

The ratio of the binder with respect to the negative electrode active material is usually 0.1% by mass to 20% by mass.

Particularly, when the binder contains a rubbery polymer typified by SBR as a main component, the ratio of the binder with respect to the negative electrode active material is preferably 0.1% by mass to 5% by mass. Further, when the binder contains a fluorine-based polymer typified by polyvinylidene fluoride as a main component, the ratio of the binder with respect to the negative electrode active material is preferably 1% by mass to 15% by mass.

### [2-2-2-4. Current Collector]

As the current collector on which the negative electrode active material is retained, any known current collector can be used. Examples of the current collector of the negative electrode include metal materials such as aluminum, copper, nickel, stainless steel, and nickel-plated steel, among which copper is particularly preferred because of its processability and cost.

The current collector may take any shape of, for example, a metal foil, a metal cylinder, a metal coil, a metal plate, a metal thin film, an expanded metal, a punched metal, and a foamed metal. Thereamong, the current collector is preferably a metal foil or a metal thin film. The metal foil or the metal thin film may be in the form of a mesh as appropriate.

When the current collector of the negative electrode has a plate shape, a film shape or the like, the current collector may have any thickness; however, the thickness is usually 1 µm to 1 mm.

### [2-2-2-5. Thickness and Density of Negative Electrode Active Material Layer]

The thickness of the negative electrode active material layer, which is determined by subtracting the thickness of the current collector from the thickness of the whole negative electrode, is not particularly limited; however, from the standpoint of obtaining a high capacity and a high output, the thickness of the negative electrode active material layer is usually 15 µm to 300 µm. Further, the negative electrode active material layer has a density of usually 0.8 g·cm⁻³ to 2.2 g·cm⁻³. The density of the negative electrode active material layer is preferably 0.9 g·cm⁻³ or higher, more preferably 1.0 g·cm⁻³ or higher, particularly preferably 1.1 g·cm⁻³ or higher, most preferably 1.2 g·cm⁻³ or higher, but preferably 1.7 g·cm⁻³ or lower, more preferably 1.6 g·cm⁻³ or lower, particularly preferably 1.5 g·cm⁻³ or lower, most preferably 1.4 g·cm⁻³ or lower. When the density of the negative electrode active material layer is in this range, good dispersion of electrolytes and good electrical conductivity between active materials are obtained in the negative electrode active material layer; therefore, side reactions such as Li metal precipitation on the negative electrode during continuous charging can be reduced.

The density of the negative electrode active material layer is determined by measuring the thickness and the weight of the negative electrode active material layer.

### [2-2-2-6. Porosity of Negative Electrode Active Material Layer]

The porosity of the negative electrode active material layer indicates a ratio of the pore volume with respect to the volume of the negative electrode material layer, and it is usually 10% to 80%. The porosity of the negative electrode active material layer is preferably 20% or higher, more preferably 28% or higher, particularly preferably 32% or higher, most preferably 35% or higher. Meanwhile, the porosity of the negative electrode active material layer is preferably 70% or lower, more preferably 60% or lower, particularly preferably 55% or lower, most preferably 50% or lower. When the porosity of the negative electrode active material layer is in this range, good dispersion of electrolytes and good electrical conductivity between active materials are obtained in the negative electrode active material layer; therefore, side reactions such as Li metal precipitation on the negative electrode during continuous charging can be reduced.

The porosity of the negative electrode active material layer is determined by measuring the volume of pores of 5.4 nm or larger by a mercury intrusion method.

### [2-3. Positive Electrode]

The positive electrode includes: a positive electrode active material layer containing a positive electrode active material and a binder; and a current collector.

### [2-3-1. Positive Electrode Active Material]

The positive electrode active material used in the positive electrode is not particularly limited as long as it is capable of electrochemically occluding and releasing metal ions. Specifically, the positive electrode active material is, for example, a lithium-transition metal compound. Any of such compounds may be used singly, or two or more thereof may be used in any combination.

### [2-3-1-1. Lithium-Transition Metal Compound]

Examples of the lithium-transition metal compound include sulfides, phosphate compounds, silicate compounds, borate compounds, and lithium-transition metal composite oxides. Thereamong, phosphate compounds and lithium-transition metal composite oxides are preferred, and lithium-transition metal composite oxides are more preferred.

Examples of the lithium-transition metal composite oxides include those having a spinel structure that is three-dimensionally diffusible, or a layered structure that allows two-dimensional diffusion of lithium ions.

The lithium-transition metal composite oxides having a spinel structure are generally represented by the following composition formula (1):

Li_{x'}M'₂O₄ (1)

(wherein, x' satisfies 1 ≤ x' ≤ 1.5, and M' represents at least one transition metal element).

Specific examples of such lithium-transition metal composite oxides include LiMn₂O₄, LiCoMnO₄, LiNi_{0.5}Mn_{1.5}O₄, and LiCoVO₄.

The lithium-transition metal composite oxides having a layered structure are generally represented by the following composition formula (2):

Li₁₊ₓMO₂ (2)

(wherein, x satisfies -0.1 ≤ x ≤ 0.5, and M represents at least one transition metal element).

Specific examples of such lithium-transition metal composite oxides include LiCoO₂, LiNiO₂, LiNi_{0.85}Co_{0.10}Al_{0.05}O₂, LiNi_{0.80}Co_{0.15}Al_{0.05}O₂, LiNi_{0.33}Co_{0.33}Mn_{0.33}O₂, Li_{1.05}Ni_{0.33}Co_{0.33}Mn_{0.33}O₂, LiNi_{0.5}Co_{0.2}Mn_{0.3}O₂, Li_{1.05}Ni_{0.5}Co_{0.2}Mn_{0.3}O₂, LiNi_{0.6}Co_{0.2}Mn_{0.2}O₂, and LiNi_{0.8}Co_{0.1}Mn_{0.1}O₂.

Thereamong, from the standpoint of improving the battery capacity, the lithium-transition metal composite oxides having a layered structure are preferred, and transition metal composite oxides represented by the following composition formula (3) are more preferred:

Liₐ₁Ni_{b1}M_{c1}O₂ (3)

(wherein, a1, b1, and c1 represent numerical values satisfying 0.90 ≤ a1 ≤ 1.10, 0.30 ≤ b1 ≤ 0.98, and 0.01 ≤ c1 ≤ 0.5, respectively, and satisfy 0.50 ≤ b1 + c1 and b1 + c1 = 1; and M represents at least one element selected from the group consisting of Mn, Al, Mg, Zr, Fe, Ti, and Er).

In the composition formula (3), d1 represents a numerical value of 0.01 ≤ d1 ≤ 0.50.

Particularly, from the standpoint of the structural stability of the lithium-transition metal composite oxides, transition metal oxides represented by the following composition formula (4) are still more preferred:

Liₐ₂Ni_{b2}Co_{c2}M_{d2}O₂ (4)

(wherein, a2, b2, and c2 represent numerical values satisfying 0.90 ≤ a2 ≤ 1.10, 0.50 ≤ b2 ≤ 0.98, and 0.01 ≤ c2 < 0.50, respectively, and satisfy b2 + c2 = 1; and M represents at least one element selected from the group consisting of Mn, Al, Mg, Zr, Fe, Ti, and Er).

Preferred specific examples of the lithium-transition metal oxides represented by the composition formula (4) include LiNi_{0.85}Co_{0.10}Al_{0.05}O₂, LiNi_{0.08}Co_{0.15}Al_{0.05}O₂, LiNi_{0.5}Co_{0.2}Mn_{0.3}O₂, Li_{1.05}Ni_{0.50}Co_{0.20}Mn_{0.30}O₂, LiNi_{0.6}Co_{0.2}Mn_{0.2}O₂, and LiNi_{0.8}Co_{0.1}Mn_{0.1}O₂.

In the above composition formulae, M preferably contains Mn or Al, more preferably contains Mn, and M is still more preferably Mn or Al. The reason for this is because the structural stability of the respective lithium-transition metal oxides is thereby improved, so that structural deterioration during repeated charging and discharging is inhibited.

### [2-3-1-2. Introduction of Heteroelement]

In the lithium-transition metal composite oxides, an element other than the elements included in the above-described composition formulae (heteroelement) may be introduced.

### [2-3-1-3. Surface Coating of Positive Electrode Active Material]

The positive electrode active material may be used in the form that a substance (surface adhering substance) having a composition different from that of the positive electrode active material is adhered to the surface. Examples of the surface adhering substance include oxides such as aluminum oxide, sulfates such as lithium sulfate, and carbonates such as lithium carbonate.

These surface adhering substances can be adhered to the surface of the positive electrode active material by, for example, a method in which each surface adhering substance is dissolved or suspended in a solvent and the resulting solution or suspension is added to and impregnated into the positive electrode active material, followed by drying.

A surface adhering substance is used in an amount of preferably not less than 1 µmol/g or not less than 10 µmol/g, but usually 1 mmol/g or less, with respect to the amount of the positive electrode active material.

In the present specification, a positive electrode active material onto the surface of which the above-described surface adhering substance is adhered is also referred to as "positive electrode active material".

### [2-3-2. Constitution and Production Method of Positive Electrode]

The constitution of the positive electrode and a method of producing the positive electrode will now be described. In the present embodiment, the production of the positive electrode using the positive electrode active material can be carried out by a conventional method. In other words, the positive electrode can be obtained by a coating method in which a positive electrode active material layer is formed on a current collector by dry-mixing the positive electrode active material and a binder with, as required, a conductive material, a thickening agent and the like to form a sheet and subsequently press-bonding this sheet onto a positive electrode current collector, or by dissolving or dispersing these materials in a solvent such as an aqueous solvent or an organic solvent to prepare a slurry and subsequently applying and drying this slurry onto a positive electrode current collector. Alternatively, for example, the above-described positive electrode active material may be roll-molded into a sheet electrode, or compression-molded into a pellet electrode. In this process, it is preferred to perform consolidation by means of hand pressing, roller pressing or the like so as to increase the packing density of the positive electrode active material.

A case of sequentially applying and drying a slurry onto a positive electrode current collector will now be described.

### [2-3-2-1. Content of Active Material]

The content of the positive electrode active material in the positive electrode active material layer is usually 80% by mass to 99.5% by mass.

### [2-3-2-2. Conductive Material]

As the conductive material, any known conductive material can be used. Specific examples thereof include: metal materials, such as copper and nickel; and carbon-based materials, for example, graphites such as natural graphites and artificial graphites, carbon blacks such as acetylene black, and amorphous carbon such as needle coke. Any of these conductive materials may be used singly, or two or more thereof may be used in any combination at any ratio. The conductive material is used such that it is contained in the positive electrode active material layer in an amount of usually 0.01% by mass to 50% by mass.

### [2-3-2-3. Binder]

For example, when the positive electrode active material layer is formed by a coating method, the type of the binder used in the production of the positive electrode active material layer is not particularly limited as long as the binder is a material that can be dissolved or dispersed in a liquid medium used for the preparation of a slurry and, from the standpoints of weather resistance, chemical resistance, heat resistance, flame retardancy and the like, for example, fluorine-based resins, such as polyvinyl fluoride, polyvinylidene fluoride, and polytetrafluoroethylene; and CN group-containing polymers, such as polyacrylonitrile and polyvinylidene cyanide are preferred.

Further, for example, a mixture, a modification product, a derivative, a random copolymer, an alternating copolymer, a graft copolymer, or a block copolymer of the above-described polymers can be used as well. Any of these binders may be used singly, or two or more thereof may be used in any combination at any ratio.

When a resin is used as the binder, the weight-average molecular weight of the resin may be set arbitrarily as long as the effects of the present invention are not markedly impaired; however, it is usually 10,000 to 3,000,000. When the molecular weight is in this range, the strength of the electrode is improved, so that the formation of the electrode can be carried out in a preferred manner.

The ratio of the binder in the positive electrode active material layer is usually 0.1% by mass to 80% by mass.

### [2-3-2-4. Current Collector]

The material of the positive electrode current collector is not particularly limited, and any known material can be used. Specific examples thereof include metal materials, such as aluminum, stainless steel, nickel-plated steel, titanium, and tantalum. Thereamong, aluminum is preferred.

The current collector may take any shape of, for example, a metal foil, a metal cylinder, a metal coil, a metal plate, a metal thin film, an expanded metal, a punched metal, and a foamed metal. Thereamong, the current collector is preferably a metal foil or a metal thin film. The metal foil or the metal thin film may be in the form of a mesh as appropriate.

When the current collector of the positive electrode has a plate shape, a film shape or the like, the current collector may have any thickness; however, the thickness is usually 1 µm to 1 mm.

### [2-3-2-5. Thickness and Density of Positive Electrode Active Material Layer]

The thickness of the positive electrode active material layer, which is determined by subtracting the thickness of the current collector from the thickness of the whole positive electrode, is not particularly limited; however, from the standpoint of obtaining a high capacity and a high output, it is usually 10 µm to 500 µm on one side of the current collector. Further, the positive electrode active material layer has a density of usually 1.5 g·cm⁻³ to 4.5 g·cm⁻³.

The density of the positive electrode active material layer is determined by measuring the thickness and the weight of the positive electrode active material layer.

### [2-3-2-6. Surface Coating of Positive Electrode Active Material Layer]

The above-described positive electrode plate may be used in the form that a substance having a composition different from that of the positive electrode plate is adhered to the surface and, as such a substance, the same substance as the surface adhering substance that may be adhered to the surface of the positive electrode active material is used.

### [2-4. Separator]

A separator is usually arranged between the positive electrode and the negative electrode for the purpose of inhibiting a short circuit. In this case, the non-aqueous liquid electrolyte is usually impregnated into this separator.

The material and the shape of the separator are not particularly limited, and any known material and shape can be employed as long as the effects of the invention according to the present embodiment are not markedly impaired.

### [2-4-1. Material]

The material of the separator is not particularly limited as long as it is a material that is stable against the non-aqueous liquid electrolyte, and preferred examples thereof include: oxides, such as alumina and silicon dioxide; nitrides, such as aluminum nitride and silicon nitride; sulfates, such as barium sulfate and calcium sulfate; inorganic materials, such as glass filters composed of glass fibers; and resins, such as polyolefins. The material of the separator is more preferably a polyolefin, particularly preferably a polyethylene or a polypropylene. Any of these materials may be used singly, or two or more thereof may be used in any combination at any ratio. The above-described materials may be laminated as well.

### [2-4-2. Form]

The form of the separator is not particularly limited; however, a nonwoven fabric, a woven fabric, or a thin film such as a microporous film is preferably used. As a thin-film separator, one having a pore size of 0.01 to 1 µm and a thickness of 1 to 50 µm is preferably used. Aside from such an independent thin-film separator, a separator obtained by forming a composite porous layer that contains particles of an inorganic material on the surface layer of the positive electrode and/or that of the negative electrode using a resin binder may be used as well. The separator is preferably a microporous film or a nonwoven fabric since such a separator has excellent liquid retainability.

### [2-4-3. Porosity]

When a porous material such as a porous sheet or a nonwoven fabric is used as the separator, the porosity of the separator may be set arbitrarily; however, it is usually 20% to 90%.

### [2-4-4. Air Permeability]

The air permeability of the separator in the non-aqueous liquid electrolyte secondary battery can be grasped in terms of Gurley value. The Gurley value indicates the difficulty of air permeation through a film in the thickness direction, and is represented by the number of seconds required for 100 mL of air to pass through the film. The Gurley value of the separator may be set arbitrarily; however, it is usually 10 to 1,000 sec/100 mL.

### [2-5. Battery Design]

### [2-5-1. Electrode Group]

An electrode group may have either a layered structure in which the above-described positive electrode plate and a negative electrode plate are layered with the above-described separator being interposed therebetween, or a wound structure in which the above-described positive electrode plate and a negative electrode plate are spirally wound with the above-described separator being interposed therebetween. The volume ratio of the electrode group with respect to the internal volume of the battery (this volume ratio is hereinafter referred to as "electrode group occupancy") is usually 40% to 90%.

### [2-5-2. Current Collector Structure]

In an electrode group having the above-described layered structure, a structure in which metal core portions of the respective electrode layers are bundled and welded to a terminal can be preferably used. A structure in which the resistance is reduced by arranging plural terminals in each electrode can be preferably used as well. In an electrode group having the above-described wound structure, the internal resistance can be reduced by arranging plural lead structures on each of the positive electrode and the negative electrode and bundling them to a terminal.

### [2-5-3. Protective Element]

Examples of a protective element that can be used include: a PTC (Positive Temperature Coefficient) element, a thermal fuse, and a thermistor, whose resistance increases with heat generation caused by excessive current flow or the like; and a valve (current cutoff valve) that blocks an electric current flowing into a circuit in response to a rapid increase in the battery internal pressure or internal temperature in the event of abnormal heat generation. The protective element is preferably selected from those that are not activated during normal use at a high current, and it is more preferred to design the battery such that neither abnormal heat generation nor thermal runaway occurs even without a protective element.

### [2-5-4. Outer Package]

The non-aqueous liquid electrolyte secondary battery is usually constructed by housing the above-described non-aqueous liquid electrolyte, negative electrode, positive electrode, separator, and the like in an outer package (outer casing). This outer package is not limited, and any known outer package can be employed as long as the effects of the invention according to the present embodiment are not markedly impaired.

The material of the outer casing is not particularly limited as long as it is a substance that is stable against the non-aqueous liquid electrolyte; however, from the standpoint of weight reduction, a metal such as aluminum or an aluminum alloy, or a laminated film is preferably used.

Examples of an outer casing using any of the above-described metals include those having a hermetically sealed structure obtained by welding metal pieces together by laser welding, resistance welding, or ultrasonic welding, and those having a caulked structure obtained using the above-described metals via a resin gasket.

### [2-5-5. Shape]

Further, the shape of the outer package may be selected arbitrarily, and the outer package may have any of, for example, a cylindrical shape, a prismatic shape, a laminated shape, a coin shape, and a large-sized shape.

### EXAMPLES

Specific embodiments of the present invention will now be described in more detail by way of Examples and Comparative Examples; however, the present invention is not limited thereto.

The abbreviations of the compounds used in Examples and Comparative Examples are shown below. It is noted here that the viscosities of chain carboxylic acid esters were measured at 25°C using an Ubbelohde viscometer and a vibratory densimeter.
DMC: dimethyl carbonate
MA: methyl acetate (viscosity at 25°C = 0.36 cP)
MP: methyl propionate (viscosity at 25°C = 0.44 cP)
EP: ethyl propionate (viscosity at 25°C = 0.49 cP)
LiBOB: lithium bis(oxalato)borate
LiFSO₃: lithium fluorosulfonate
Li[PF₂(C₂O₄)₂]: lithium difluorobis(oxalato)phosphate
LiPO₂F₂: lithium difluorophosphate

### [Example A]

### [Production of Non-aqueous Liquid Electrolyte Secondary Batteries]

### <Production of Positive Electrode>

A slurry was prepared by mixing 85 parts by mass of Li_{1.00}Ni_{0.33}Mn_{0.33}Co_{0.33}O₂ as a positive electrode active material, 10 parts by mass of acetylene black as a conductive material, and 5 parts by mass of polyvinylidene fluoride (PVdF) as a binder in an N-methyl-2-pyrrolidone. This slurry was uniformly applied and dried onto a 15 µm-thick aluminum foil, and this aluminum foil was subsequently roll-pressed to produce a positive electrode. In the thus obtained positive electrode, an active material layer had a density of 2.6 g/cm³.

### <Production of Negative Electrode>

To 49 parts by mass of graphite powder, 50 parts by mass of an aqueous dispersion of sodium carboxymethyl cellulose (concentration of sodium carboxymethyl cellulose = 1% by mass) and 1 part by mass of an aqueous dispersion of a styrene-butadiene rubber (concentration of styrene-butadiene rubber = 50% by mass) were added as a thickening agent and a binder, respectively, and these materials were mixed using a disperser to prepare a slurry. The thus obtained slurry was uniformly applied and dried onto a 10 µm-thick copper foil, and this copper foil was subsequently roll-pressed to produce a negative electrode.

In the negative electrode used in Examples, a negative electrode active material layer had a density of 1.35 g/cm³. Further, the porosity of the negative electrode active material layer, which was determined by measuring the volume of pores of 5.4 nm or larger by a mercury intrusion method, was 40.8%.

### <Preparation of Non-aqueous Liquid Electrolytes>

### [Examples A-1 to A-3, Reference Examples A-4 to A-6, and Comparative Examples A-1 to A-5]

Under a dry argon atmosphere, based on a non-aqueous liquid electrolyte in which thoroughly-dried LiPF₆ was dissolved at 1.15 mol/L (13.9% by mass, estimated density = 1.26 g/cm³) in a mixture of ethylene carbonate, ethyl methyl carbonate, and dimethyl carbonate (volume ratio = 3:3:4), non-aqueous liquid electrolytes were prepared by further incorporating thereinto a symmetric chain carbonate and a chain carboxylic acid ester having a viscosity of 0.01 to 0.47 cP at 25°C (C), as well as a salt containing an oxalato complex anion (A), a salt containing an anion (D) having an FSO₂ skeleton, and other compound in the respective combinations shown in Table 1. It is noted here that Comparative Example A-1 contained neither a symmetric chain carbonate and a chain carboxylic acid ester having a viscosity of 0.01 to 0.47 cP at 25°C, nor a salt containing an oxalato complex anion (A). Further, "Content (% by mass)" in the table indicates the content of each compound, taking a total amount of each non-aqueous liquid electrolyte as 100% by mass.

### [Comparative Example A-6]

Under a dry argon atmosphere, based on a non-aqueous liquid electrolyte in which thoroughly-dried LiPF₆ was dissolved at 1.15 mol/L (13.7% by mass, estimated density = 1.27 g/cm³) in a mixture of ethylene carbonate, ethyl methyl carbonate, and dimethyl carbonate (volume ratio = 3:1:6), a non-aqueous liquid electrolyte was prepared by further incorporating thereinto a symmetric chain carbonate and a chain carboxylic acid ester having a viscosity of 0.01 to 0.47 cP at 25°C (C) in the combination shown in Table 1.

### [Comparative Example A-7]

Under a dry argon atmosphere, based on a non-aqueous liquid electrolyte in which thoroughly-dried LiPF₆ was dissolved at 1.15 mol/L (14.1% by mass, estimated density = 1.24 g/cm³) in a mixture of ethylene carbonate and ethyl methyl carbonate (volume ratio = 3:7), a non-aqueous liquid electrolyte was prepared by further incorporating thereinto a symmetric chain carbonate and a chain carboxylic acid ester having a viscosity of 0.01 to 0.47 cP at 25°C (C), as well as a salt containing an anion (D) having an FSO₂ skeleton in the combination shown in Table 1.

<Production of Non-aqueous Liquid Electrolyte Secondary Batteries>

The above-obtained positive electrode and negative electrode, and a polyolefin separator were laminated in the order of the negative electrode, the separator, and the positive electrode. The thus obtained battery element was wrapped in an aluminum laminate film, and the above-described non-aqueous liquid electrolytes of Examples and Comparative Examples were each injected thereto, followed by vacuum-sealing, whereby sheet-form non-aqueous liquid electrolyte secondary batteries were produced.

### [Evaluation of Non-aqueous Liquid Electrolyte Secondary Batteries]

The non-aqueous liquid electrolyte secondary batteries produced by the above-described procedure were evaluated as follows.

### • Initial Charging and Discharging

In a 25°C thermostat chamber, each sheet-form non-aqueous liquid electrolyte secondary battery was constant-current charged to 3.7 V at 0.05 C (a current value at which a rated capacity based on the hourly discharge capacity is discharged in one hour is defined as 1 C; the same applies below) and subsequently subjected to constant current-constant voltage charging up to a voltage of 4.3 V at 0.2 C, followed by constant-current discharging to 2.5 V at 0.2 C. The non-aqueous liquid electrolyte secondary battery was further subjected to constant current-constant voltage charging up to 4.1 V at 0.2 C, and then stored at 60°C for 24 hours to be stabilized. Thereafter, the battery was constant-current discharged to 2.5 V at 25°C.

### • Capacity Retention Rate after Continuous Charging

The non-aqueous liquid electrolyte secondary battery subjected to the above-described initial charging and discharging was subjected to constant current-constant voltage charging up to a voltage of 4.3 V at 0.2 C, and subsequently constant-current discharged to 2.5 V at 0.2 C. The discharge capacity in this process was defined as the initial capacity (C₁).

Next, the non-aqueous liquid electrolyte secondary battery was subjected to 7-day constant-voltage charging at 4.3 V under a condition of 60°C.

This non-aqueous liquid electrolyte secondary battery was constant-current discharged to 2.5 V at 0.2 C in a 25°C thermostat chamber, and subsequently subjected to constant current-constant voltage charging up to a voltage of 4.3 V at 0.2 C. Thereafter, the battery was constant-current discharged to 2.5 V at 0.2 C. The discharge capacity in this process was defined as the capacity after continuous charging (C₂), and the ratio (C₂/C₁) of the initial capacity (C₁) and the capacity after continuous charging (C₂) was determined as "capacity retention rate after continuous charging" (in Table 1, this is shown as a relative value, taking the value of Comparative Example A-1 as 100).

It can be said that the larger the value of the capacity retention rate after continuous charging, the more preferred it is.

Table 1 shows the capacity retention rate after continuous charging. As apparent from Table 1, when the non-aqueous liquid electrolyte according to the present invention, in which the content of a symmetric chain carbonate and a chain carboxylic acid ester having a viscosity of 0.01 to 0.47 cP at 25°C (C) is in a specific concentration range and the content ratio (A/B) of an oxalato complex anion (A) with respect to PF₆⁻ anion (B) is in a specific range, is used, the capacity retention rate after continuous charging of a non-aqueous liquid electrolyte secondary battery can be increased, so that the performance of the non-aqueous liquid electrolyte secondary battery can be improved. On the other hand, when a non-aqueous liquid electrolyte in which the content of a symmetric chain carbonate and a chain carboxylic acid ester having a viscosity of 0.01 to 0.47 cP at 25°C (C) was higher than a specific concentration range, or a non-aqueous liquid electrolyte not containing any symmetric chain carbonate was used, the effect of improving the capacity retention rate after continuous charging was not observed.

Further, the effect of improving the capacity retention rate after continuous charging was not observed also when a non-aqueous liquid electrolyte in which the difluorophosphate anion-containing salt used in the prior art (Patent Document 4) was added without a salt containing an oxalato complex anion (A) was used.

### [Table 1]

**Table 1**

| | Chain carboxylic acid ester having a viscosity of 0.01 to 0.47 cP at 25°C (mass%) | Esters other than those on the left (mass%) | Symmetric chain carbonate + Specified viscosity ester (C) (mass%) | Salt containing an oxalato complex anion (A) (mass%) | Salt containing an anion having an FSO₂ skeleton (D) (mass%) | Oxalato complex anion/PF₆-anion(A/B) (mass%/mass%) | Other compounds (mass%) | Capacity retention rate after continuous charging (relative value) |
|---|---|---|---|---|---|---|---|---|
| Example A-1 | MA (3) | - | 34 | LiBOB (1) | - | 0.07 | - | 100.8 |
| Example A-2 | MA (6) | | 36 | LiBOB (1) | - | 0.08 | - | 100.8 |
| Example A-3 | MA (12) | - | 40 | LiBOB (1) | - | 0.08 | - | 100.3 |
| Reference Example A-4 | MA (3) | - | 34 | - | LiFSO₃ (1) | 0.00 | - | 100.2 |
| Reference Example A-5 | MA (1) | - | 33 | - | LiFSO₃ (1) | 0.00 | - | 100.3 |
| Reference Example A-6 | MA (3) | - | 34 | - | LiFSO₃ (1) | 0.00 | - | 100.3 |
| Comparative Example A-1 | - | - | 33 | - | - | 000 | - | 100 |
| Comparative Example A-2 | MA (3) | - | 35 | - | - | 000 | - | 98.2 |
| Comparative Example A3 | MP (3) | - | 35 | - | - | 000 | - | 98.4 |
| Comparative Example A-4 | MA (3) | - | 34 | - | - | 000 | LiPO₂F₂ (1) | 99.8 |
| Comparative Example A-5 | MA (3) | - | 33 | - | LiFSO₃ (4) | 000 | - | 100 |
| Comparative Example A-6 | MA (3) | - | 50 | - | - | 000 | - | 98.5 |
| Comparative Example A-7 | MA (3) | - | 3 | - | LiFSO₃ (1) | 000 | - | 100 |

### [Example B]

### [Production of Non-aqueous Liquid Electrolyte Secondary Batteries]

### <Preparation of Non-aqueous Liquid Electrolytes>

### [Examples B-1 to B-5, and Comparative Examples B-1 to B-3, B-5, B-6, and B-9 to B-11]

Under a dry argon atmosphere, based on a non-aqueous liquid electrolyte in which thoroughly-dried LiPF₆ was dissolved at 1.15 mol/L (13.9% by mass, estimated density = 1.26 g/cm³) in a mixture of ethylene carbonate, ethyl methyl carbonate, and dimethyl carbonate (volume ratio = 3:3:4), non-aqueous liquid electrolytes were prepared by further incorporating thereinto a symmetric chain carbonate and a chain carboxylic acid ester having a viscosity of 0.01 to 0.47 cP at 25°C (C), as well as other ester, a salt containing an oxalato complex anion (A), a salt containing an anion (D) having an FSO₂ skeleton, and other compound in the respective combinations shown in Tables 2 and 3. It is noted here that Comparative Example B-1 contained neither a symmetric chain carbonate and a chain carboxylic acid ester having a viscosity of 0.01 to 0.47 cP at 25°C (C) nor a salt containing an oxalato complex anion (A). Further, "Content (% by mass)" in the tables indicates the content of each compound, taking a total amount of each non-aqueous liquid electrolyte as 100% by mass.

### [Comparative Examples B-4, B-7, and B-8]

Under a dry argon atmosphere, based on a non-aqueous liquid electrolyte in which thoroughly-dried LiPF₆ was dissolved at 1.15 mol/L (13.7% by mass, estimated density = 1.27 g/cm³) in a mixture of ethylene carbonate, ethyl methyl carbonate, and dimethyl carbonate (volume ratio = 3:1:6), non-aqueous liquid electrolytes were prepared by further incorporating thereinto a symmetric chain carbonate and a chain carboxylic acid ester having a viscosity of 0.01 to 0.47 cP at 25°C (C), as well as a salt containing an oxalato complex anion (A), and a salt containing an anion (D) having an FSO₂ skeleton in the respective combinations shown in Tables 2 and 3.

### <Production of Non-aqueous Liquid Electrolyte Secondary Batteries>

In the same manner as in Example A, a positive electrode and a negative electrode were produced, and the thus produced positive electrode and negative electrode, and a polyolefin separator were laminated in the order of the negative electrode, the separator, and the positive electrode. The thus obtained battery element was wrapped in an aluminum laminate film, and the above-described non-aqueous liquid electrolytes of Examples and Comparative Examples were each injected thereto, followed by vacuum-sealing, whereby sheet-form non-aqueous liquid electrolyte secondary batteries were produced.

### [Evaluation of Non-aqueous Liquid Electrolyte Secondary Batteries]

### • Capacity Loss in Continuous Charging

The non-aqueous liquid electrolyte secondary batteries produced by the above-described procedure were evaluated as follows.

Each non-aqueous liquid electrolyte secondary battery subjected to initial charging and discharging in the same manner as in the above-described Example A was subjected to constant current-constant voltage charging up to a voltage of 4.3 V at 0.2 C. Subsequently, the battery was subjected to 7-day constant-voltage charging at 4.3 V under a condition of 60°C, and the amount of electricity that flowed during this constant-voltage charging was defined as "capacity loss in continuous charging" (in Table 2, this is shown as a relative value, taking the value of Comparative Example B-1 as 100).

It can be said that the smaller capacity loss in continuous charging, the more preferred it is.

Tables 2 and 3 show the capacity loss in continuous charging. As apparent from Tables 2 and 3, when the non-aqueous liquid electrolyte according to the present invention, in which the content of a symmetric chain carbonate and a chain carboxylic acid ester having a viscosity of 0.01 to 0.47 cP at 25°C (C) is in a specific concentration range and the content ratio (A/B) of an oxalato complex anion (A) with respect to PF₆⁻ anion (B) is in a specific range, is used, the capacity loss in continuous charging of a non-aqueous liquid electrolyte secondary battery can be reduced, so that the performance of the non-aqueous liquid electrolyte secondary battery can be improved. On the other hand, when a non-aqueous liquid electrolyte which did not contain a chain carboxylic acid ester having a viscosity of 0.01 to 0.47 cP at 25°C (C) or an oxalato complex anion (A), a non-aqueous liquid electrolyte in which the content of a symmetric chain carbonate and a chain carboxylic acid ester having a viscosity of 0.01 to 0.47 cP at 25°C (C) was higher than a specific concentration range, or a non-aqueous liquid electrolyte in which the content of an oxalato complex anion (A) with respect to PF₆⁻ anion (B) was higher than a specific ratio (A/B) was used, the effect of improving the capacity loss in continuous charging was not observed.

Further, the effect of improving the capacity loss in continuous charging was not observed also when a non-aqueous liquid electrolyte in which ethyl propionate used in the prior art (Patent Document 3) was added without a chain carboxylic acid ester having a viscosity of 0.01 to 0.47 cP at 25°C, or a non-aqueous liquid electrolyte in which the difluorophosphate anion (Patent Document 4) was added without a compound represented by Formula (A) was used.

### [Table 2]

**Table 2**

| | Chain carboxylic acid ester having a viscosity of 0.01 to 0.47 cP at 25°C (mass%) | Esters other than those on the left (mass%) | Symmetric chain carbonate + Specified viscosity ester (C) (mass%) | Salt containing an oxalato complex anion (A) (mass%) | Salt containing an anion having an FSO₂ skeleton (D) (mass%) | Oxalato complex anion/PF₆-anion(AA3) (mass%/mass%) | Other compounds (mass%) | Capacity loss in continuous charging (relative value) |
|---|---|---|---|---|---|---|---|---|
| Example B-1 | MA (3) | - | 34 | LiBOB (1) | - | 0.08 | - | 88 |
| Example B-2 | MA (3) | - | 34 | LiBOB (1) | LiFSO₃ (1) | 0.08 | - | 83 |
| Example B-3 | MA (3) | - | 34 | LiBOB (0.5) | LiFSO₃ (1) | 0.04 | - | 82 |
| Example B-4 | MA (3) | - | 34 | Li[PF₂(C₂O₄)₂] (1) | - | 0.08 | - | 92 |
| Example B-5 | MA (3) | - | 34 | Li[PF₂(C₂O₄)₂] (1) | LiFSO₃ (1) | 0.08 | - | 94 |

### [Table 3]

**Table 3**

| | Chain carboxylic acid ester having a viscosity of 0.01 to 0.47 cP at 25°C (mass%) | Esters other than those on the left (mass%) | Symmetric chain carbonate + Specified viscosity ester (C) (mass%) | Salt containing an oxalato complex anion (A) (mass%) | Salt containing an anion having an FSO₂ skeleton (D) (mass%) | Oxalato complex anion/PF₆-anion(A/B) (mass%/mass%) | Other compounds (mass%) | Capacity loss in continuous charging (relative value) |
|---|---|---|---|---|---|---|---|---|
| Comparative Example B-1 | - | - | 33 | - | - | 0.00 | - | 100 |
| Comparative Example B-2 | MA (3) | - | 35 | - | - | 0.00 | - | 115 |
| Comparative Example B-3 | MA (3) | - | 35 | - | - | 0.00 | LiPO₂F₂ (1) | 105 |
| Comparative Example B-4 | MA (3) | - | 50 | - | - | 0.00 | - | 103 |
| Comparative Example B-5 | - | - | 32 | - | LiFSO₃ (1) | 0.00 | - | 122 |
| Comparative Example B-6 | - | EP (3) | 34 | - | LiFSO₃ (1) | 0.00 | - | 105 |
| Comparative Example B-7 | MA (3) | - | 49 | LiBOB (1) | LiFSO₃ (1) | 0.08 | - | 107 |
| Comparative Example B-8 | MA (3) | - | 49 | Li[PF₂(C₂O₄)₂] (1) | LiFSO₃ (1) | 0.08 | - | 141 |
| Comparative Example B-9 | - | EP (3) | 34 | LiBOB (1) | LiFSO₃ (1) | 0.08 | - | 108 |
| Comparative Example B-10 | MA (3) | - | 33 | LiBOB (4) | - | 0.31 | - | 173 |
| Comparative Example B-11 | MA (3) | - | 32 | LiBOB (7) | LiFSO₃ (1) | 0.58 | - | 252 |

### [Example C]

### [Production of Non-aqueous Liquid Electrolyte Secondary Batteries]

### [Example C-1 and Comparative Examples C-3 and C-4]

Under a dry argon atmosphere, based on a non-aqueous liquid electrolyte in which thoroughly-dried LiPF₆ was dissolved at 1.15 mol/L (13.9% by mass, estimated density = 1.26 g/cm³) in a mixture of ethylene carbonate, ethyl methyl carbonate, and dimethyl carbonate (volume ratio = 3:3:4), non-aqueous liquid electrolytes were prepared by further incorporating thereinto a symmetric chain carbonate and a chain carboxylic acid ester having a viscosity of 0.01 to 0.47 cP at 25°C (C), as well as other ester, a salt containing an oxalato complex anion (A), and a salt containing an anion (D) having an FSO₂ skeleton in the respective combinations shown in Table 4. In the table, "Content (% by mass)" indicates the content of each compound, taking a total amount of each non-aqueous liquid electrolyte as 100% by mass.

### [Comparative Examples C-1 and C-2]

Under a dry argon atmosphere, based on a non-aqueous liquid electrolyte in which thoroughly-dried LiPF₆ was dissolved at 1.15 mol/L (13.7% by mass, estimated density = 1.27 g/cm³) in a mixture of ethylene carbonate, ethyl methyl carbonate, and dimethyl carbonate (volume ratio = 3:1:6), non-aqueous liquid electrolytes were prepared by further incorporating thereinto a symmetric chain carbonate and a chain carboxylic acid ester having a viscosity of 0.01 to 0.47 cP at 25°C (C), as well as a salt containing an oxalato complex anion (A), and a salt containing an anion (D) having an FSO₂ skeleton in the respective combinations shown in Table 3.

### <Production of Non-aqueous Liquid Electrolyte Secondary Batteries>

In the same manner as in Example A, a positive electrode and a negative electrode were produced, and the thus produced positive electrode and negative electrode, and a polyolefin separator were laminated in the order of the negative electrode, the separator, and the positive electrode. The thus obtained battery element was wrapped in an aluminum laminate film, and the above-described non-aqueous liquid electrolytes of Examples and Comparative Examples were each injected thereto, followed by vacuum-sealing, whereby sheet-form non-aqueous liquid electrolyte secondary batteries were produced.

### [Evaluation of Non-aqueous Liquid Electrolyte Secondary Batteries]

### • Charging Resistance Increase Rate

The non-aqueous liquid electrolyte secondary batteries produced by the above-described procedure were evaluated as follows.

Each non-aqueous liquid electrolyte secondary battery subjected to initial charging and discharging in the same manner as in the above-described Example A was subjected to constant current-constant voltage charging at 25°C up to a voltage of 3.7 V at 0.2 C. This battery was charged at each current value of 0.05 C, 1.0 C, 0.25 C, 0.5 C, 0.75 C, and 1 C at 25°C, and the voltage was measured at a point of 10 seconds from the start of the charging process. From the thus obtained current-voltage straight line, the internal resistance (R₁) was determined.

Next, the battery was subjected to constant current-constant voltage charging up to a voltage of 4.3 V at 0.2 C. Subsequently, the battery was subjected to 7-day constant-voltage charging at 4.3 V under a condition of 60°C. This non-aqueous liquid electrolyte secondary battery was constant-current discharged to 2.5 V at 0.2 C in a 25°C thermostat chamber, and subsequently subjected to constant current-constant voltage charging up to a voltage of 3.7 V at 0.2 C. This battery was charged at each current value of 0.05 C, 1.0 C, 0.25 C, 0.5 C, 0.75 C, and 1 C at 25°C, and the voltage was measured at a point of 10 seconds from the start of the charging process. The internal resistance was determined from the thus obtained current-voltage straight line, and this value was defined as the resistance after continuous charging (R₂). A rate of change between R₁ and R₂, [(R₂ - R₁)/R₁], was defined as "charging resistance increase rate" (in Table 3, this is shown as a relative value, taking the value of Comparative Example C-1 as 100).

Table 4 shows the charging resistance increase rate. As apparent from Table 4, when the non-aqueous liquid electrolyte according to the present invention, in which the content of a symmetric chain carbonate and a chain carboxylic acid ester having a viscosity of 0.01 to 0.47 cP at 25°C (C) is in a specific concentration range and the content ratio (A/B) of an oxalato complex anion (A) with respect to PF₆⁻ anion (B) is in a specific range and which contains an anion (D) having an FSO₂ skeleton, is used, the charging resistance increase rate of a non-aqueous liquid electrolyte secondary battery can be reduced, so that the performance of the non-aqueous liquid electrolyte secondary battery can be improved. On the other hand, when a non-aqueous liquid electrolyte which did not contain an anion (D) having an FSO₂ skeleton, or a non-aqueous liquid electrolyte in which the content of a symmetric chain carbonate and a chain carboxylic acid ester having a viscosity of 0.01 to 0.47 cP at 25°C (C) was higher than a specific concentration range was used, the effect of improving the charging resistance increase rate was not observed.

Further, the effect of improving the charging resistance increase rate of a non-aqueous liquid electrolyte secondary battery was not observed also when a non-aqueous liquid electrolyte in which lithium difluorophosphate used in the prior art (Patent Document 4) was added without a salt containing an oxalate complex anion (A) was used.

### [Table 4]

**Table 4**

| | Chain carboxylic acid ester having a viscosity of 0.01 to 0.47 cP at 25°C (mass%) | Esters other than those on the left (mass%) | Symmetric chain carbonate + Specified viscosity ester (C) (mass%) | Salt containing an oxalato complex anion (A) (mass%) | Salt containing an anion having an FSO₂ skeleton (D) (mass%) | Oxalato complex anion/PF₆-anion(A/B) (mass%/mass%) | Other compounds (mass%) | Charging resistance increase rate (relative value) |
|---|---|---|---|---|---|---|---|---|
| Example C-1 | MA (3) | - | 34 | LiBOB (1) | LiFSO₃ (1) | 0.07 | - | 90 |
| Comparative Example C-1 | MA (3) | - | 49 | LiBOB (1) | LiFSO₃ (1) | 0.07 | - | 93 |
| Comparative Example C-2 | MA (3) | - | 49 | Li[PF₂(C₂O₄)₂] (1) | LiFSO₃ (1) | 0.07 | - | 94 |
| Comparative Example C-3 | - | EP (3) | 34 | LiBOB (1) | LiFSO₃ (1) | 0.07 | - | 92 |
| Comparative Example C-4 | MA (3) | - | 32 | LiBOB (7) | LiFSO₃ (1) | 0.55 | - | 97 |

## Claims

1. A non-aqueous liquid electrolyte, comprising:
an oxalato complex anion (A);
LiPF₆; and
a symmetric chain carbonate and a chain carboxylic acid ester having a viscosity of 0.01 to 0.47 cP at 25°C (C),
wherein
a ratio (A/B) of the content (mass) of the oxalato complex anion (A) with respect to the content (mass) of PF₆⁻ anion (B) is 0.0001 to 0.30, and
a total content of the symmetric chain carbonate and the chain carboxylic acid ester having a viscosity of 0.01 to 0.47 cP at 25°C (C) is 1 to 45% by mass with respect to a total amount of the non-aqueous liquid electrolyte.

2. The non-aqueous liquid electrolyte according to claim 1, wherein the content of the chain carboxylic acid ester having a viscosity of 0.01 to 0.47 cP at 25°C is 0.1 to 44% by mass with respect to a total amount of the non-aqueous liquid electrolyte.

3. The non-aqueous liquid electrolyte according to claim 1 or 2, wherein the chain ester compound having a viscosity of 0.01 to 0.47 cP at 25°C is a compound represented by the following Formula (I):
R¹COOCH₃ (I)
wherein, R¹ represents a hydrogen atom or an alkyl group having 1 or 2 carbon atoms, and a hydrogen atom bound to a carbon atom of the alkyl group is optionally substituted with a halogen atom.

4. The non-aqueous liquid electrolyte according to claim 3, wherein R¹ in Formula (I) is a methyl group.

5. The non-aqueous liquid electrolyte according to any one of claims 1 to 4, further comprising an anion (D) having an FSO₂ skeleton as an auxiliary agent.

6. The non-aqueous liquid electrolyte according to claim 5, wherein a ratio (A/D) of the content of the oxalato complex anion (A) with respect to the content of the anion (D) having an FSO₂ skeleton is 0.01 to 10.

7. The non-aqueous liquid electrolyte according to claim 5 or 6, wherein the ratio (A/D) of the content of the oxalato complex anion (A) with respect to the content of the anion (D) having an FSO₂ skeleton is 0.01 to 0.7.

8. The non-aqueous liquid electrolyte according to any one of claims 1 to 7, wherein a ratio of a total content (mass) of the symmetric chain carbonate and the chain carboxylic acid ester having a viscosity of 0.01 to 0.47 cP at 25°C (C) with respect to the content (mass) of the LiPF₆ is 0.01 to 3.5.

9. The non-aqueous liquid electrolyte according to any one of claims 1 to 8, wherein the oxalato complex anion (A) is a non-fluorinated bis(oxalato)borate anion and/or a difluorobis(oxalato)phosphate anion.

10. A non-aqueous liquid electrolyte battery, comprising:
a positive electrode that comprises a positive electrode active material capable of occluding and releasing metal anions;
a negative electrode that comprises a negative electrode active material capable of occluding and releasing metal anions; and
the non-aqueous liquid electrolyte according to any one of claims 1 to 9.

11. The non-aqueous liquid electrolyte battery according to claim 10, wherein the positive electrode active material comprises a lithium-transition metal compound represented by the following composition formula (3):
Liₐ₁Ni_{b1}M_{c1}O₂ (3)
(wherein, a1, b1, and c1 represent numerical values of 0.90 ≤ al ≤ 1.10, 0.20 ≤ b1 ≤ 0.98, and 0.01 ≤ c1 ≤ 0.50, respectively, and satisfy b1 + c1 = 1; and M represents at least one element selected from the group consisting of Co, Mn, Al, Mg, Zr, Fe, Ti, and Er).

12. The non-aqueous liquid electrolyte battery according to claim 11, wherein M in the composition formula (3) comprises Mn.

13. The non-aqueous liquid electrolyte battery according to any one of claims 10 to 12, wherein the negative electrode active material comprises a carbon-based material.

14. The non-aqueous liquid electrolyte battery according to any one of claims 10 to 13, wherein a negative electrode active material layer in the negative electrode has a density of 0.8 to 1.7 g/cm³.

15. The non-aqueous liquid electrolyte battery according to any one of claims 10 to 14, wherein the negative electrode active material layer in the negative electrode has a porosity of 10 to 80%.
